# EUROPEAN PATENT SPECIFICATION

(11) **EP 3 553 222 B1**
(45) Date of publication and mention of the grant of the patent: **27.07.2022**
(21) Application number: 19166749.2
(22) Date of filing: 02.04.2019
(51) Int. Cl.: D06F 39/08, F16K 31/08

(54) **ANTI-FLOODING SAFETY DEVICE FOR A WASHING MACHINE, OF THE TYPE COMPRISING ROTATABLE MAGNETS**
ÜBERFLUTUNGSSCHUTZVORRICHTUNG FÜR EINE WASCHMASCHINE, VOM TYP MIT DREHBAREN MAGNETEN
DISPOSITIF DE SECURITE ANTI-INONDATION POUR MACHINE A LAVER, DU TYPE COMPORTANT DES AIMANTS ROTATIFS

(30) Priority: 12.04.2018 IT 201800004433
(43) Date of publication of application: 16.10.2019
(73) Proprietor: TP Reflex Group S.p.A., 21040 Venegono Superiore (VA) (IT)
(72) Inventor: BRUSA, Alberto, 21050 Cantello (VA) (IT); MONCADA, Yessica, 21038 Leggiuno (VA) (IT); ROTTA, Andrea, 22070 Appiano Gentile (CO) (IT)
(74) Representative: Metroconsult Srl

(56) References cited:
- EP-A1- 0 984 093
- DE-A1- 3 409 673
- DE-C1- 19 825 222
- GB-A- 1 472 888
- US-A1- 2006 169 935

## Description

The present invention relates to an anti-flooding safety device for a washing machine according to the preamble of claim 1.

When using washing machines known in the art, there is a risk that the surrounding environment might get flooded following a sudden leak in the wash liquid supply or drain system. For example, sudden leaks may be due to faulty components of the washing machines or failures of the wash liquid supply or drain tubes.

Consequently, the washing machines known in the art include anti-flooding safety devices for continuously monitoring and checking the presence of any leaks in the washing machine, in particular during the wash liquid supply and drain steps.

The anti-flooding safety devices known in the art comprise a valve body in which a duct for the passage of a liquid is defined, said valve body comprising:
- an inlet section, for connecting the device to a liquid supply source;
- an outlet section, for connecting the device to a supply tube for supplying said liquid into a washing machine, wherein a second tube surrounds the supply tube, thereby forming a hollow space;
- an intermediate section having a passage for the liquid and connecting said inlet section to said outlet section.

The anti-flooding devices known in the art also comprise a shut-off device (or valve) movably arranged in said intermediate section for opening and/or closing said passage, said shut-off device being provided with a first magnet connected to an actuation device for controlling said shut-off device. Usually the closing of the passage occurs through a displacement of the shut-off device in the same direction as that of the liquid flow, whereas the opening of the passage occurs through a displacement of the shut-off device contrary to the direction of the liquid flow.

In particular, the actuation device comprises a second magnet, the polarity of which is opposite to that the first magnet, mounted on a rotary holder, which in a first position supports the second magnet in a manner such as to repel the first magnet with opposite polarization and preload the shut-off device by means of the first magnet (usually in a direction opposite to that of the liquid flow) in order to keep the passage of the intermediate section open.

Moreover, said actuation device comprises a reaction element that reacts with the leakage liquid being fed through the hollow space formed between the supply tube and the second tube, wherein said reaction element moves the rotary holder into a second position, thereby causing the second magnet to turn about an axis substantially perpendicular to the direction of motion of the shut-off device, so as to attract the first magnet and move the shut-off device in the closing direction for closing the passage formed in the intermediate section of the anti-flooding device, in particular the displacement of the shut-off device occurring in the direction of the liquid flow.

For example, such an anti-flooding safety device for a washing machine is known from document EP0984093B1, which comprises a reaction element that reacts with the leakage liquid being fed through the hollow space between the supply tube and the second tube, said reaction element consisting of at least one element made of compressed anhydrous sponge.

In a situation in which there is no leakage liquid in the hollow space between the supply tube and the second tube, the reaction element made of sponge is dry and compressed; in such a situation, the rotary holder is in the first position, in which it supports the second magnet in a manner such as to repel the first magnet with opposite polarization and preload the shut-off device by means of the first magnet against the direction of the liquid flow, in order to keep the passage of the intermediate section open.

If any liquid is leaking from the supply tube, the hollow space gets filled up and the liquid comes in contact with said reaction element made of sponge, which then swells up and moves the rotary holder into a second position, i.e. a position in which it causes, in turn, the second magnet to rotate so as to attract the first magnet and bring the shut-off device (usually in the direction of the liquid flow) into the position where it closes the passage formed in the intermediate section of the anti-flooding device.

However, the anti-flooding device described in document EP0984093B1 suffers from a few drawbacks, in particular due to the fact that the reaction element consists of at least one element made of sponge.

A first problem caused by the use of a reaction element made of sponge is that it does not allow for effectively testing the anti-flooding device, since the reaction element made of sponge can only be used once; in fact, when said reaction element made of sponge comes in contact with a liquid, it loses its original characteristics and cannot be reused.

As a consequence, it is apparent that using a sponge element as a reaction element for reacting to a liquid leak from the supply tube is particularly expensive, in addition to being clearly not very versatile.

Also, the use of said sponge element does not allow for automated production, since it would imply high costs and would therefore be unprofitable.

Furthermore, problems have often arisen because of the fact that the reaction element made of sponge may be adversely affected by the moisture that is present in the installation environment, and this may result in malfunctioning and/or undesired activation of the entire anti-flooding device.

On the other hand, a further drawback caused by the provision of a reaction element made of sponge lies in the fact that it only allows for activation of the anti-flooding device when the sponge comes in contact and becomes soaked with leakage liquid, i.e. when the leak from the supply tube is of considerable proportions.

Document DE19825222C1 relates to an anti-flooding safety device similar to the one disclosed in document EP0984093B1 and comprising a reaction element made of a material that dissolves in the leaked water; therefore, the anti-flooding device described in document DE19825222C1 substantially suffers the same drawbacks of the one disclosed in document EP0984093B1.

In this frame, it is the main object of the present invention to provide an anti-flooding safety device for a washing machine, which is so designed as to overcome the drawbacks of the prior art.

In particular, it is one object of the present invention to provide an anti-flooding safety device for a washing machine, which is so designed that it can be tested for the number of times necessary for verifying its proper operation.

It is another object of the present invention to provide an anti-flooding safety device for a washing machine which is so designed as to simplify the assembly steps to the greatest possible extent, thus reducing the costs thereof and allowing for automated installation of parts at small costs.

It is a further object of the present invention to provide an anti-flooding safety device for a washing machine which is so designed as to be unaffected by the moisture that is present in the installation environment, and which will operate properly without the possibility of undesired activations.

It is another object of the present invention to provide an anti-flooding device which can also operate in the absence of contact between the reaction element and the leakage liquid, and which can also be activated in a situation in which the leak from the supply tube is still at an initial stage and of small proportions. Further objects, features and advantages of the present invention will become apparent from the following detailed description and from the annexed drawings, which are supplied by way of non-limiting explanatory example, wherein:
- Figure 1 is a sectional view of a first operating condition of an anti-flooding safety device for a washing machine according to the present invention;
- Figure 2 is a sectional view of a second operating condition of the anti-flooding device according to the present invention;
- Figure 3 is an exploded perspective view of some components of the anti-flooding device according to the present invention.

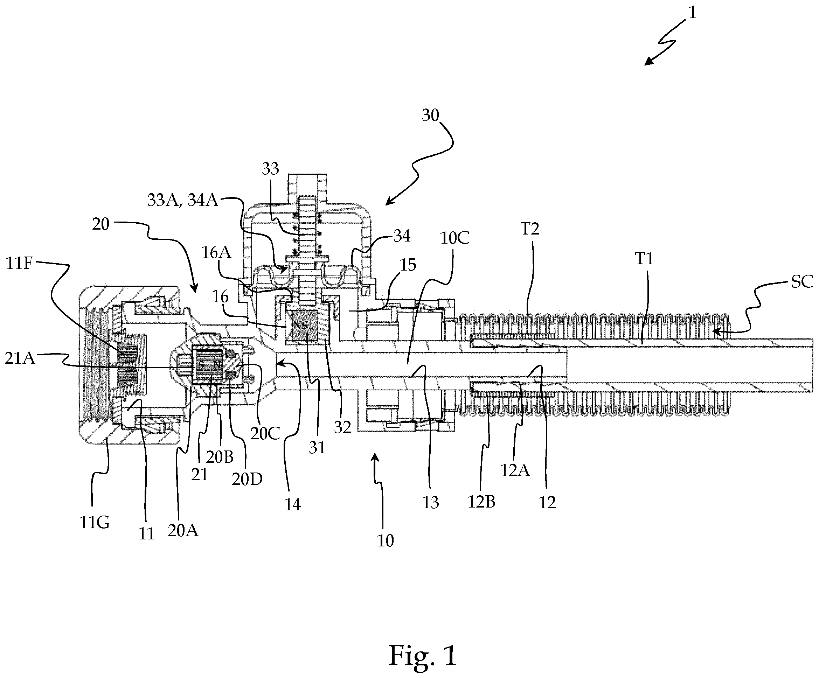

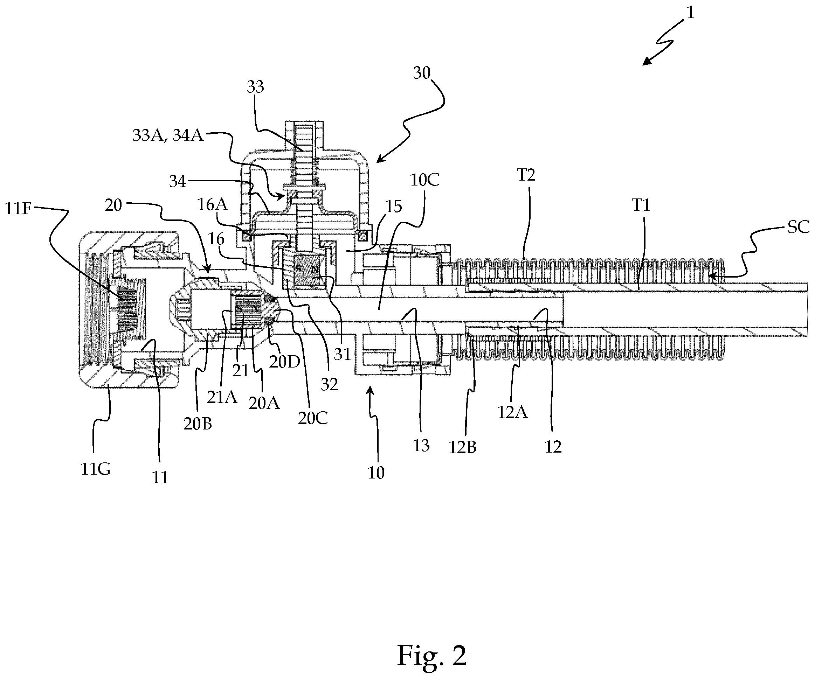

With reference to the annexed drawings, reference numeral 1 in Figures 1 and 2 designates as a whole an anti-flooding safety device for a washing machine according to the present invention. It should be noted that the washing machine, which may be a laundry washing machine, a washer-dryer, a clothes dryer, a dishwasher, etc., is not shown in the annexed drawings.

The anti-flooding device 1 comprises a valve body (designated as a whole by reference numeral 10), in which a duct 10C is defined for the passage of the liquid. In particular, said valve body 10 comprises:
- an inlet section 11, for connecting the anti-flooding device 1 to a liquid supply source;
- an outlet section 12, for connecting the anti-flooding device 1 to a supply tube T1 for supplying said liquid into a washing machine, wherein a second tube T2 surrounds the supply tube T1, thereby forming a hollow space SC;
- an intermediate section 13 having a passage 14 for the liquid and connecting said inlet section 11 to said outlet section 12.

As can be seen in Figures 1 and 2, the valve body 10 preferably comprises a ring nut 11G mounted in the region of the inlet section 11 for coupling the device 1 to a liquid supply source, such as, for example, a tap (not shown); in such portion of the device 1, a filter 11F and/or a flow regulator (not shown) may also be installed.

Moreover, the outlet section 12 of the valve body 10 comprises annular retaining teeth or reliefs 12A that ensure proper coupling to the inner portion of the supply tube T1. Preferably, the device 1 comprises a locking component 12B, in particular a mechanical one (consisting, for example, of a metallic clinching bushing), which can be locally deformed to fasten the supply tube T1 onto the outlet section 12 of the valve body 10.

It should be noted that the supply tube T1 and the second tube T2 are preferably made of plastic material, e.g. polypropylene or PVC. Also, said supply tube T1 and second tube T2 may consist, at least partially, of corrugated tubes, i.e. with a corrugated wall, wherein the wall or section of said supply tube T1 and second tube T2 is defined by a series of reliefs and recesses, preferably annular and parallel and arranged in a regular series; said reliefs and recesses may also have a spiral conformation along the supply tube T1 and/or along the second tube T2. The anti-flooding device 1 according to the present invention comprises a shut-off device (designated as a whole by reference numeral 20) comprising a closing element 20A movably arranged in said intermediate section 13 for opening and/or closing said passage 14, said closing element 20A comprising a first magnet 21.

In a preferred embodiment, shown in Figures 1 and 2, the shut-off device 20 is made up of two parts and comprises a guiding element 20B for housing and guiding said closing element 20A in the intermediate section 13 of the duct 10C, in particular said closing element 20A being in turn provided with a housing 21A in which the first magnet 21 is positioned; for example, the housing 21A may be obtained by giving said closing element 20A a cup-like shape, wherein said closing element 20A further comprises a protuberance 20C adapted to close the passage 14, in particular with the help of at least one sealing element 20D. In a preferred embodiment, the first magnet 21 and the associated housing 21A in the closing element 20A have a substantially cylindrical shape.

It is however clear that the shut-off device 20 and the first magnet 21 may also be implemented in different ways and shapes.

The anti-flooding device 1 according to the present invention further comprises an actuation device (designated as a whole by reference numeral 30), which is positioned, at least partially, in a chamber 15 of the valve body 10 in fluidic communication with the hollow space SC, said actuation device 30 comprising a second magnet 31 mounted on a rotary holder 32, wherein the holder 32 is associated with a blocking element 33 adapted to retain the holder 32 and the second magnet 31 in a first position (shown in Fig. 1), so as to repel the first magnet 21 with opposite polarization and preload the shut-off device 20 by means of the first magnet 21 in order to keep the passage 14 open. For example, the fluidic communication between the chamber 15 and the hollow space SC may be obtained by providing one or more ducts or apertures (not shown) adapted to connect such areas of the valve body 10.

It should be noted that said first position is shown in Fig. 1, which highlights that the first magnet 21 and the second magnet 31 are positioned in a manner such as to have the same poles N (indicated in this drawing as "N") facing each other; as a consequence, in the condition illustrated in Fig. 1 the second magnet 31 exerts repulsion on the first magnet 21, thus keeping the mobile element 20B at a distance from the passage 14, and hence keeping the passage 14 in an open condition.

The actuation device 30 further comprises a reaction element, which reacts with the leakage liquid entering the chamber 15 of the valve body 10 through the hollow space SC.

In accordance with the present invention, said reaction element consists of a flexible membrane 34 associated with the blocking element 33, said flexible membrane 34 being sensitive to the increased pressure in the chamber 15 caused by a leakage from the first tube T1 and being adapted to produce a movement of the blocking element 33 to allow the rotation of the holder 32 and move the second magnet 31 from said first position to a second position, in which the second magnet 31 exerts attraction on the first magnet 31 in order to close the passage 14.

It should be noted that said second position is shown in Fig. 2, which highlights that the first magnet 21 and the second magnet 31 are positioned in a manner such as to have their opposite poles (indicated in this drawing as "N" and "S") facing each other; as a consequence, in the condition illustrated in Fig. 2 the second magnet 31 exerts attraction on the first magnet 21 and positions it in such a way as to keep the passage 14 in a closed condition.

In substance, it is therefore apparent that, when liquid comes out of the supply tube T1 (usually because of a break, at least partial, in said supply tube T1), water accumulates into the hollow space SC comprised between the supply tube T1 and the second tube T2; as a consequence, in the chamber 15 (which is in fluidic communication with said hollow space SC) the pressure increases and causes a displacement of the flexible membrane 34 and of the blocking element 33 coupled thereto. Such displacement frees the holder 32, which will then turn (also because of the repulsion between the first magnet 21 and the second magnet 31) and move the second magnet 31 in such a way to exert an attraction on the first magnet 21 and close the passage 14.

In a preferred embodiment, the elastic membrane 34 has a substantially discoid and corrugated shape, i.e. its cross-section is defined by at least one annular relief and/or at least one annular recess; in such an embodiment, the blocking element 33 has a substantially rod-like shape. As can be especially noticed in Figures 1 and 2, said rod-shaped blocking element 33 is positioned in a manner such as to develop in a direction substantially perpendicular to an axis whereon the passage 14 prevalently lies.

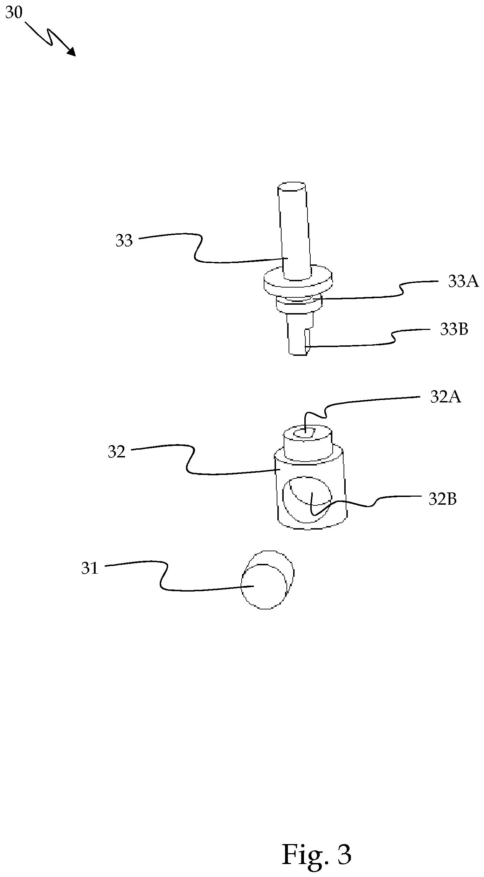

Moreover, said membrane 34 has a hole 34A, in particular formed in a central portion thereof, said hole 34A being so shaped and sized as to allow the passage of the blocking element 33. Preferably, the blocking element 33 and the elastic membrane 34 comprise mutual connection means adapted to connect them solidly together; in particular, said connection means comprise a restriction 33A (or a step 33A, visible in Fig. 3) located in an intermediate portion of the blocking element 33 and adapted to receive an edge of said hole 34A, wherein said edge may be realized to include a thicker portion.

In a preferred embodiment, the second magnet 31 and its holder 32 are positioned in a compartment 16 formed in said chamber 15, in particular in such a manner such that the second magnet 31 can rotate about an axis (not shown, which may substantially coincide with the longitudinal axis of the blocking element 33). In such an embodiment, the compartment 16 has an orifice 16A allowing the passage of at least a portion of the holder 32 and/or of the blocking element 33 for the mutual coupling thereof.

Figure 3 is an exploded perspective view of the actuation device 30 according to the present invention, i.e. the second magnet 31, the rotary holder 32 and the blocking element 33.

In this figure one can see that the holder 32 and the blocking element 33 comprise mutual coupling means 32A, 33B adapted to allow the holder 32 to be blocked in order to keep the second magnet 31 in said first position, and to allow the holder 32 to free itself of the blocking element 33 in order to let the second magnet 31 move into the second position when liquid comes out of the supply tube T1.

In particular, said coupling means comprise a mouth 32A of the holder 32 having a conformation substantially corresponding to and dimensions slightly greater than a terminal portion 33B of the blocking element 33; it is clear that the provision of said mouth 32A and terminal portion 33B permits the blocking element 33 to easily come out of the holder 32 when there is a leak from the supply tube T1, resulting in a pressure increase that will cause a displacement of the flexible membrane 34 and of the blocking element 33 coupled thereto.

In Fig. 3 one can also see that the holder 32 comprises a seat 32B adapted to house the second magnet 31; in a preferred embodiment, the second magnet 31 and the associated seat 32B in the holder 32 have a substantially cylindrical shape.

The features of the anti-flooding device 1 according to the present invention, as well as the advantages thereof, are apparent from the above description.

In particular, the peculiar features of the present invention allow obtaining an anti-flooding device 1 that can be indifferently tested for a number of times necessary for verifying its proper operation. In fact, the particular provision of a reaction element consisting of the flexible membrane 34 of the present invention makes it possible to let the second magnet switch from the first position to the second position, and vice versa, repeatedly and without fear that the actuation device 30 allowing such switching might get damaged.

It is therefore apparent that the provision of the flexible membrane 34 allows realizing the anti-flooding device 1 according to the present invention in such a way as to simplify the assembly steps to the greatest possible extent, thus reducing the costs thereof and allowing for automated installation of parts at small costs.

A further advantage of the flexible membrane 34 according to the present invention lies in the fact that it is not affected by the moisture that is present in the environment where the anti-flooding device 1 is installed; as a result, it allows said anti-flooding device 1 to operate correctly without the risk of undesired activation.

The peculiar provision of the flexible membrane 34 also allows the anti-flooding device 1 to operate in the absence of contact between the reaction element and the leakage liquid. As a matter of fact, said flexible membrane 34 is sensitive to any increase in (air and/or liquid) pressure occurring inside the chamber 15 in fluidic communication with the hollow space SC within the second tube T2; since the flexible membrane 34 also allows detecting an increased air pressure in the chamber 15, it permits the activation of the anti-flooding device 1 even when the leak from the supply tube T1 is still at an initial stage and of small proportions. It is therefore evident that the anti-flooding device 1 allows preventing substantial damage, which would otherwise occur should the leak from the supply tube T1 be of considerable proportions.

## Claims

1. Anti-flooding safety device (1) for a washing machine, in particular for household use, said device (1) comprising a valve body (10) in which a duct (10C) is defined for the passage of a liquid, comprising:
- an inlet section (11), for connecting the device (1) to a liquid supply source;
- an outlet section (12) for connecting the device (1) to a supply tube (T1) for supplying said liquid into a washing machine, wherein a second tube (T2) surrounds the supply tube (T1), thereby forming a hollow space (SC);
- an intermediate section (13) having a passage (14) for the liquid and connecting said inlet section (11) to said outlet section (12),
wherein the anti-flooding device (1) comprises:
- a shut-off device (20) comprising a closing element (20A) movably arranged in said intermediate section (13) for opening and/or closing said passage (14), said closing element (20A) comprising a first magnet (21);
- an actuation device (30) positioned, at least partially, in a chamber (15) of the valve body (10) in fluidic communication with the hollow space (SC), said actuation device (30) comprising a second magnet (31) mounted on a rotary holder (32), wherein the holder (32) is associated with a blocking element (33) arranged to retain the holder (32) and the second magnet (31) in a first position, so as to repel the first magnet (21) with opposite polarization and preload the shut-off device (20) by means of the first magnet (21) in order to keep the passage (14) open;
- a reaction element, which reacts with the leakage liquid entering the chamber (15) of the valve body (10) through the hollow space (SC),
said device (1) being **characterized in that**:
said reaction element consists of a flexible membrane (34) associated with the blocking element (33), said flexible membrane (34) being sensitive to the increased pressure in the chamber (15) caused by a leakage from the first tube (T1) and being adapted to produce a displacement of the blocking element (33), wherein said displacement frees the holder (32), which will then turn also because of the repulsion between the first magnet (21) and the second magnet (31), and move the second magnet (31) from said first position to a second position, in which the second magnet (31) exerts attraction on the first magnet (21) in order to close the passage (14).

2. Device (1) according to claim 1, **characterized in that** said elastic membrane (34) has a discoid and corrugated shape, and said blocking element (33) has a rod-like shape.

3. Device (1) according to one or more of the preceding claims, **characterized in that** said membrane (34) has a hole (34A), in particular formed in a central portion thereof, said hole (34A) being so shaped and sized as to allow the passage of the blocking element (33).

4. Device (1) according to claim 3, **characterized in that** the blocking element (33) and the elastic membrane (34) comprise mutual connection means suitable for connecting them solidly together, in particular said connection means comprising a restriction (33A) located in an intermediate portion of the blocking element (33) and suitable for receiving an edge of said hole (34A).

5. Device (1) according to one or more of the preceding claims, **characterized in that** the second magnet (31) and the respective holder (32) are positioned in a compartment (16) formed in said chamber (15) of the valve body (10), in particular in a manner such that said second magnet (31) can rotate about an axis.

6. Device (1) according to claim 5, **characterized in that** said compartment (16) has an orifice (16A) allowing the passage of at least a portion of the holder (32) and/or of the blocking element (33) for the mutual coupling thereof.

7. Device (1) according to one or more of the preceding claims, **characterized in that** the holder (32) and the blocking element (33) comprise mutual coupling means (32A, 33B) adapted to allow the holder (32) to be blocked in order to keep the second magnet (31) in said first position, and to allow the holder (32) to free itself of the blocking element (33) in order to let the second magnet (31) move into the second position when the liquid comes out of the supply tube (T1).

8. Device (1) according to claim 7, **characterized in that** said coupling means comprise a mouth (32A) of the holder (32) having a conformation corresponding to and dimensions greater than a terminal portion (33B) of the blocking element (33).

9. Device (1) according to one or more of the preceding claims, **characterized in that** said shut-off device (20) is made up of two parts and comprises a guiding element (20B) for housing and guiding said closing element (20A) in the intermediate section (13) of the duct (10C), in particular said closing element (20A) being provided with a housing (21A) in which the first magnet (21) is positioned.

10. Device (1) according to claim 9, **characterized in that** said housing (21A) is obtained by giving said closing element (20A) a cup-like shape, wherein said closing element (20A) further comprises a protuberance (20C) adapted to close the passage (14).

## Patentansprüche

1. Antiüberschwemmungssicherheitsvorrichtung (1) für eine Waschmaschine, insbesondere für den Haushaltsgebrauch, wobei die Vorrichtung (1) einen Ventilkörper (10) umfasst, in dem ein Kanal (10C) für den Durchgang einer Flüssigkeit definiert ist, umfassend:
- einen Einlassabschnitt (11) zum Anschluss der Vorrichtung (1) an eine Flüssigkeitsversorgungsquelle;
- einen Auslassabschnitt (12) zum Verbinden der Vorrichtung (1) mit einem Zufuhrrohr (T1) zum Zuführen der Flüssigkeit in eine Waschmaschine, wobei ein zweites Rohr (T2) das Zufuhrrohr (T1) umgibt, wodurch ein Hohlraum (SC) gebildet wird;
- einen Zwischenabschnitt (13), der einen Durchgang (14) für die Flüssigkeit aufweist und den Einlassabschnitt (11) mit dem Auslassabschnitt (12) verbindet,
wobei die Antiüberschwemmungsvorrichtung (1) umfasst:
- eine Absperrvorrichtung (20) mit einem in dem Zwischenabschnitt (13) beweglich angeordneten Verschlusselement (20A) zum Öffnen und/oder Verschließen des Durchgangs (14), wobei das Verschlusselement (20A) einen ersten Magneten (21) aufweist;
- eine Betätigungsvorrichtung (30), die zumindest teilweise in einer Kammer (15) des Ventilkörpers (10) in Fluidverbindung mit dem Hohlraum (SC) angeordnet ist, wobei die Betätigungsvorrichtung (30) einen zweiten Magneten (31) umfasst, der an einem drehbaren Halter (32) angebracht ist, wobei der Halter (32) mit einem Sperrelement (33) verbunden ist, das so angeordnet ist, dass es den Halter (32) und den zweiten Magneten (31) in einer ersten Position hält, um den ersten Magneten (21) mit entgegengesetzter Polarisation abzustoßen und die Absperrvorrichtung (20) mittels des ersten Magneten (21) vorzuspannen, um den Durchgang (14) offen zu halten;
- ein Reaktionselement, das mit der durch den Hohlraum (SC) in die Kammer (15) des Ventilkörpers (10) eintretenden Leckflüssigkeit reagiert,
wobei die Vorrichtung (1) **dadurch gekennzeichnet ist, dass**:
das Reaktionselement aus einer flexiblen Membran (34) besteht, die mit dem Sperrelement (33) verbunden ist, wobei die flexible Membran (34) auf den erhöhten Druck in der Kammer (15) reagiert, der durch eine Leckage aus dem ersten Rohr (T1) verursacht wird, und geeignet ist, eine Verschiebung des Sperrelements (33) zu bewirken, wobei diese Verschiebung den Halter (32) freigibt, der sich dann auch aufgrund der Abstoßung zwischen dem ersten Magneten (21) und dem zweiten Magneten (31) dreht und den zweiten Magneten (31) von der ersten Position in eine zweite Position bewegt, in der der zweite Magnet (31) eine Anziehung auf den ersten Magneten (21) ausübt, um den Durchgang (14) zu schließen.

2. Vorrichtung (1) nach Anspruch 1, **dadurch gekennzeichnet, dass** die elastische Membran (34) eine scheibenförmige und gewellte Form hat und das Sperrelement (33) eine stabförmige Form hat.

3. Vorrichtung (1) nach einem oder mehreren der vorhergehenden Ansprüche, **dadurch gekennzeichnet, dass** die Membran (34) ein Loch (34A) aufweist, das insbesondere in einem zentralen Abschnitt davon ausgebildet ist, wobei das Loch (34A) so geformt und bemessen ist, dass es den Durchgang des Sperrelements (33) ermöglicht.

4. Vorrichtung (1) nach Anspruch 3, **dadurch gekennzeichnet, dass** das Sperrelement (33) und die elastische Membran (34) gegenseitige Verbindungsmittel aufweisen, die geeignet sind, sie fest miteinander zu verbinden, wobei die Verbindungsmittel insbesondere eine Verengung (33A) aufweisen, die in einem Zwischenbereich des Sperrelements (33) angeordnet und geeignet ist, einen Rand des Lochs (34A) aufzunehmen.

5. Vorrichtung (1) nach einem oder mehreren der vorhergehenden Ansprüche, **dadurch gekennzeichnet, dass** der zweite Magnet (31) und der entsprechende Halter (32) in einem in der Kammer (15) des Ventilkörpers (10) ausgebildeten Fach (16) positioniert sind, insbesondere so, dass der zweite Magnet (31) um eine Achse rotieren kann.

6. Vorrichtung (1) nach Anspruch 5, **dadurch gekennzeichnet, dass** das Fach (16) eine Öffnung (16A) aufweist, die den Durchgang von mindestens einem Teil des Halters (32) und/oder des Sperrelements (33) zu deren gegenseitiger Kopplung ermöglicht.

7. Vorrichtung (1) nach einem oder mehreren der vorhergehenden Ansprüche, **dadurch gekennzeichnet, dass** der Halter (32) und das Sperrelement (33) Mittel (32A, 33B) zur gegenseitigen Kopplung aufweisen, die geeignet sind, eine Blockierung des Halters (32) zu ermöglichen, um den zweiten Magneten (31) in der ersten Position zu halten, und um es dem Halter (32) zu ermöglichen, sich selbst von dem Sperrelement (33) zu befreien, um den zweiten Magneten (31) in die zweite Position bewegen zu lassen, wenn die Flüssigkeit aus dem Zufuhrrohr (T1) austritt.

8. Vorrichtung (1) nach Anspruch 7, **dadurch gekennzeichnet, dass** die Mittel zur Kopplung eine Öffnung (32A) des Halters (32) umfassen, die eine Form und Abmessungen aufweist, die größer sind als ein Endabschnitt (33B) des Sperrelements (33).

9. Vorrichtung (1) nach einem oder mehreren der vorhergehenden Ansprüche, **dadurch gekennzeichnet, dass** die Absperrvorrichtung (20) aus zwei Teilen besteht und ein Führungselement (20B) zur Aufnahme und Führung des Verschlusselements (20A) im Zwischenabschnitt (13) des Kanals (10C) umfasst, wobei insbesondere das Verschlusselement (20A) mit einem Gehäuse (21A) versehen ist, in dem der erste Magnet (21) angeordnet ist.

10. Vorrichtung (1) nach Anspruch 9, **dadurch gekennzeichnet, dass** das Gehäuse (21A) dadurch erhalten wird, dass dem Verschlusselement (20A) eine schalenartige Form gegeben wird, wobei das Verschlusselement (20A) ferner einen Vorsprung (20C) umfasst, der geeignet ist, den Durchgang (14) zu schließen.

## Revendications

1. - Dispositif de sécurité anti-inondation (1) pour une machine à laver, en particulier pour un usage domestique, ledit dispositif (1) comprenant un corps de vanne (10) dans lequel un conduit (10C) est défini pour le passage d'un liquide, comprenant :
- une section d'entrée (11), pour relier le dispositif (1) à une source d'alimentation en liquide ;
- une section de sortie (12) pour relier le dispositif (1) à un tube d'alimentation (T1) pour acheminer ledit liquide dans une machine à laver, un second tube (T2) entourant le tube d'alimentation (T1), formant ainsi un espace creux (SC) ;
- une section intermédiaire (13) ayant un passage (14) pour le liquide et reliant ladite section d'entrée (11) à ladite section de sortie (12),
le dispositif anti-inondation (1) comprenant :
- un dispositif de fermeture (20) comprenant un élément de fermeture (20A) disposé de manière mobile dans ladite section intermédiaire (13) pour ouvrir et/ou fermer ledit passage (14), ledit élément de fermeture (20A) comprenant un premier aimant (21) ;
- un dispositif d'actionnement (30) positionné, au moins partiellement, dans une chambre (15) du corps de vanne (10) en communication fluidique avec l'espace creux (SC), ledit dispositif d'actionnement (30) comprenant un second aimant (31) monté sur un support rotatif (32), le support (32) étant associé à un élément de blocage (33) agencé pour retenir le support (32) et le second aimant (31) dans une première position, de façon à repousser le premier aimant (21) avec une polarisation opposée et à précharger le dispositif de fermeture (20) au moyen du premier aimant (21) afin de maintenir le passage (14) ouvert ;
- un élément de réaction, qui réagit avec le liquide de fuite entrant dans la chambre (15) du corps de vanne (10) à travers l'espace creux (SC),
ledit dispositif (1) étant **caractérisé par le fait que** : ledit élément de réaction consiste en une membrane souple (34) associée à l'élément de blocage (33), ladite membrane souple (34) étant sensible à la pression accrue dans la chambre (15) provoquée par une fuite du premier tube (T1) et étant apte à produire un déplacement de l'élément de blocage (33), ledit déplacement libérant le support (32) qui va alors également tourner en raison de la répulsion entre le premier aimant (21) et le second aimant (31) et déplacer le second aimant (31) de ladite première position à une seconde position, dans laquelle le second aimant (31) exerce une attraction sur le premier aimant (21) afin de fermer le passage (14).

2. - Dispositif (1) selon la revendication 1, **caractérisé par le fait que** ladite membrane élastique (34) a une forme discoïde et ondulée, et ledit élément de blocage (33) a une forme de tige.

3. - Dispositif (1) selon une ou plusieurs des revendications précédentes, **caractérisé par le fait que** ladite membrane (34) a un trou (34A), notamment formé dans une partie centrale de celle-ci, ledit trou (34A) étant formé et dimensionné pour permettre le passage de l'élément de blocage (33).

4. - Dispositif (1) selon la revendication 3, **caractérisé par le fait que** l'élément de blocage (33) et la membrane élastique (34) comprennent des moyens de liaison mutuelle aptes à les relier solidement ensemble, notamment lesdits moyens de liaison comprenant une restriction (33A) située dans une partie intermédiaire de l'élément de blocage (33) et apte à recevoir un bord dudit trou (34A).

5. - Dispositif (1) selon une ou plusieurs des revendications précédentes, **caractérisé par le fait que** le second aimant (31) et le support respectif (32) sont positionnés dans un compartiment (16) formé dans ladite chambre (15) du corps de vanne (10), en particulier d'une manière telle que ledit second aimant (31) peut tourner autour d'un axe.

6. - Dispositif (1) selon la revendication 5, **caractérisé par le fait que** ledit compartiment (16) a un orifice (16A) permettant le passage d'au moins une partie du support (32) et/ou de l'élément de blocage (33) pour leur accouplement mutuel.

7. - Dispositif (1) selon une ou plusieurs des revendications précédentes, **caractérisé par le fait que** le support (32) et l'élément de blocage (33) comprennent des moyens d'accouplement mutuel (32A, 33B) aptes à permettre au support (32) de se bloquer afin de maintenir le second aimant (31) dans ladite première position, et à permettre au support (32) de se libérer de l'élément de blocage (33) afin de laisser le second aimant (31) se déplacer dans la seconde position lorsque le liquide sort du tube d'alimentation (T1).

8. - Dispositif (1) selon la revendication 7, **caractérisé par le fait que** lesdits moyens d'accouplement comprennent un embout (32A) du support (32) ayant une conformation correspondant à une partie terminale (33B) de l'élément de blocage (33) et des dimensions supérieures à celle-ci.

9. - Dispositif (1) selon une ou plusieurs des revendications précédentes, **caractérisé par le fait que** ledit dispositif de fermeture (20) est composé de deux parties et comprend un élément de guidage (20B) pour recevoir et guider ledit élément de fermeture (20A) dans la section intermédiaire (13) du conduit (10C), en particulier ledit élément de fermeture (20A) comportant un logement (21A) dans lequel le premier aimant (21) est positionné.

10. - Dispositif (1) selon la revendication 9, **caractérisé par le fait que** ledit logement (21A) est obtenu en donnant une forme de coupelle audit élément de fermeture (20A), ledit élément de fermeture (20A) comprenant en outre une protubérance (20C) apte à fermer le passage (14).
